# EUROPEAN PATENT APPLICATION

(11) **EP 1 863 266 A1**
(43) Date of publication of application: **05.12.2007**
(21) Application number: 06114922.5
(22) Date of filing: 02.06.2006
(51) Int. Cl.: H04N 1/32

(54) **Photograph positioning device**

(71) Applicant: Tekom Technologies, Inc., 235 Junghe City, Taipei (TW)
(72) Inventor: TSAI, Tien-Chin, 235, Junghe City, Taipei (TW)
(74) Representative: Beck, Michael Rudolf

(57) **Abstract**

A photograph positioning device comprises a coordinates locator (11), a photograph capture member (12), a storage member (13), and display means (14). The coordinates locator (11) provides the longitude and latitude of a location where a photograph is taken. The storage member (13) comprises a digital photograph storage unit (131) for storing a photograph, and a digital data storage unit (132) for storing data relating to the photograph. The device not only takes a photograph but also displays a map of the place where the photograph is taken.

## Description

### Field of the invention

The present invention relates to a photograph device; more particularly, relates to taking a photograph together with a map shown for the location of the photograph.

### Description of the related art

A general camera can be a camera using a film, or a digital camera with a memory. The camera using a film can take a limited number of photos with no possibility of browsing in advance. The film is not reusable and is hard to be kept long and needs additional processes to show the picture. Therefore, it is gradually replaced by the digital camera. The digital camera can browse the pictures taken or delete any picture chosen. And the memory the digital camera uses can be connected with a computer, a personal digital assistant (PDA) or a mobile phone for storing photographs or even processing the photographs.

But the camera can only take the photograph with the date and time recorded. Hence, when watching the photograph after a few years, only the date and time are recalled but not the place where the photograph was taken. Hence, the prior arts do not fulfill users' requests on actual use.

### Summary of the invention

The object of the present invention is to improve the availability of information and data relating to photographs.

The invention provides a a photograph positioning device according to claim 1. Advantageous embodiments are laid down in the further claims.

By the invention it is possible to take a photograph together with a map showing the location of the photograph.

To achieve the above purpose, the present invention is a photograph positioning device, comprising a coordinates locator to provide a longitude and latitude of a location where a photograph is taken; a photograph capture member to taken the photograph; a storage member connected with the coordinates locator and the photograph capture member, where the storage member comprises a digital photograph storage unit, storing photograph, and a digital data storage unit, storing data for photograph; and a geographical-location display member connected with the storage member to display a map of the location where the photograph is taken. However, the storage member can be taken out to be solely inserted into an outside processor to display the map for the photograph. Accordingly, a novel photograph positioning device is obtained.

### Brief descriptions of the drawings

The present invention will be better understood from the following detailed descriptions of the preferred embodiments according to the present invention, taken in conjunction with the accompanying drawings, in which
FIG 1 is a block view showing a first embodiment according to the present invention;
FIG 2 is a structural view of the first embodiment;
FIG 3 is a perspective view of the first embodiment;
FIG 4 is another block view of the first embodiment;
FIG 5 is a perspective views of a second embodiment, and
FIG 6 is a block view of a second embodiment.

### Description of the preferred embodiments

The following descriptions of the preferred embodiments are provided to understand the features and the structures of the present invention.

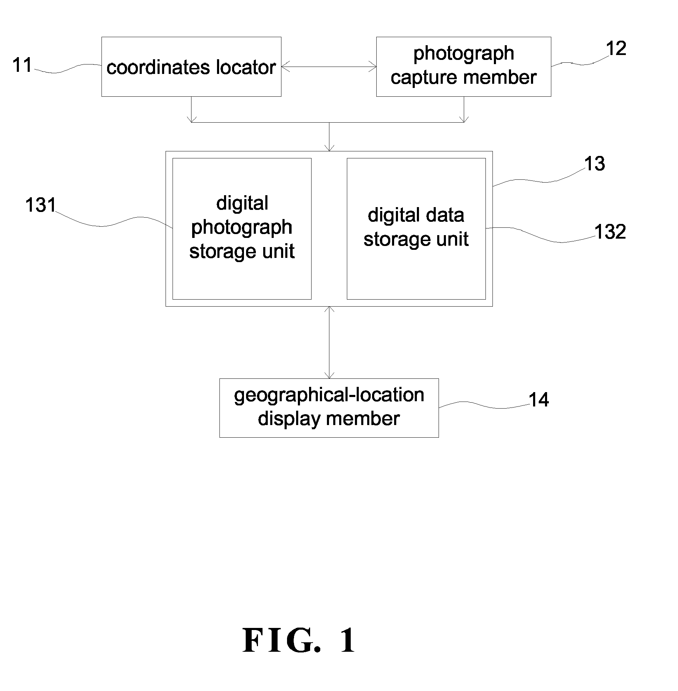

Please refer to FIG 1, which is a block view showing a first preferred embodiment of the present invention. As shown in the figure, the present invention is a photograph positioning device, comprising a coordinates locator 11, a photograph capture member 12, a storage member and a geographical-location display member 14, where a photograph is taken and a map for the location of the photograph is displayed.

The coordinates locator 11 provides a longitude and latitude of a location where the photograph is taken; and the coordinates locator 11 is a global positioning system (GPS).

The photograph capture member 12 is connected with the coordinates locator 11 to take the photograph.

The storage member 13 is connected with the coordinates locator 11 and the photograph capture member 12, comprising a digital photograph storage unit 131 for storing a photograph, i.e. data representing image information of a photograph itself, and a digital data storage unit 132 for storing further data relating to the photograph.

The geographical-location display member 14 is connected with the storage member 13 for displaying a map of the location of the photograph. Thus, a novel photograph positioning device is obtained.

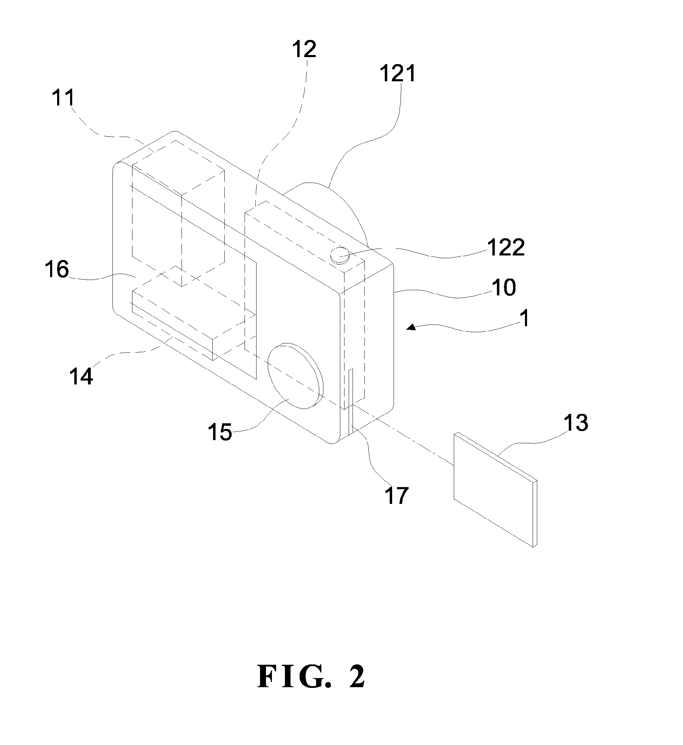

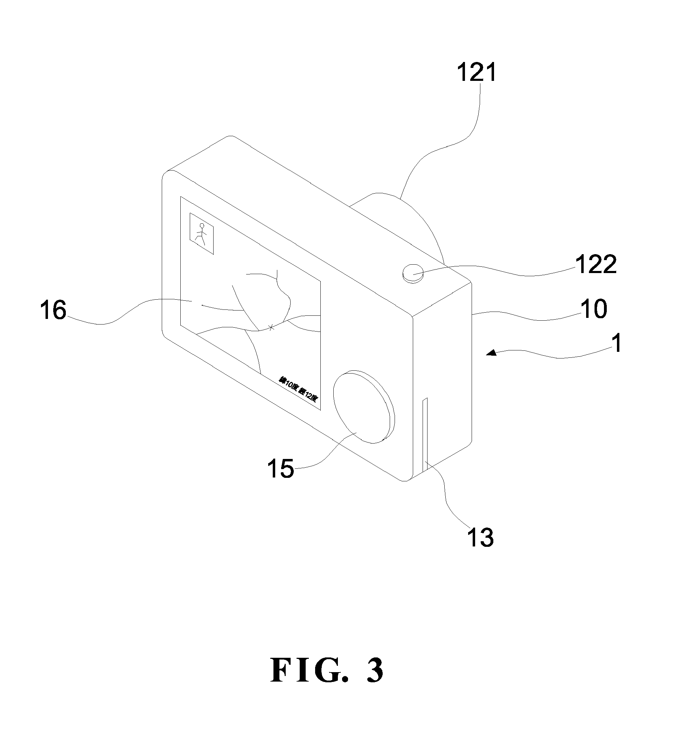

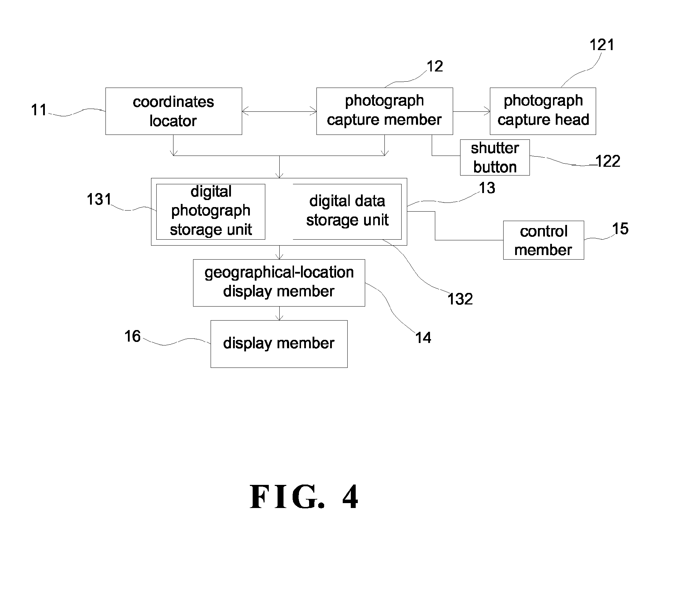

Please refer to FIG 2 to FIG 4, which are a structural, a perspective and another block views of the first preferred embodiment. As shown in the figures, when using the present invention, a coordinates locator 11, a photograph capture member 12, and a geographical-location display member 14 are deposed in a shell 10 to form a camera 1. The camera 1 has a control member 15 to perform requested operations, a display member 16 to display photograph and a slot 17 to be inserted with a storage member 13. And a photograph capture head 121 and a shutter button 122 is set on the shell 10.

On using the present invention, the photograph capture member 12 uses the photograph capture head 121 cooperated with the shutter button 122 to take a photograph. When the photograph capture member 12 takes the photograph, the photograph is recorded in the digital photograph storage unit 131 of the storage member 13; and a time, a date and a longitude and latitude of the location where the photograph is taken are recorded in a digital data storage unit 132 of the storage member 13. When a map for the location of the photograph are requested to be shown, the longitude and latitude of the location of the photograph recorded in the digital data storage unit 132 is read and is analyzed by the coordinates locator 11 to show the map for the location of the photograph on the display member 16 of the camera 1 with a help of the geographical-location display member 14. Thus, the camera 1 not only takes a photograph but also displays a map for the photograph so that a location where the photograph is taken is clearly and precisely recognized.

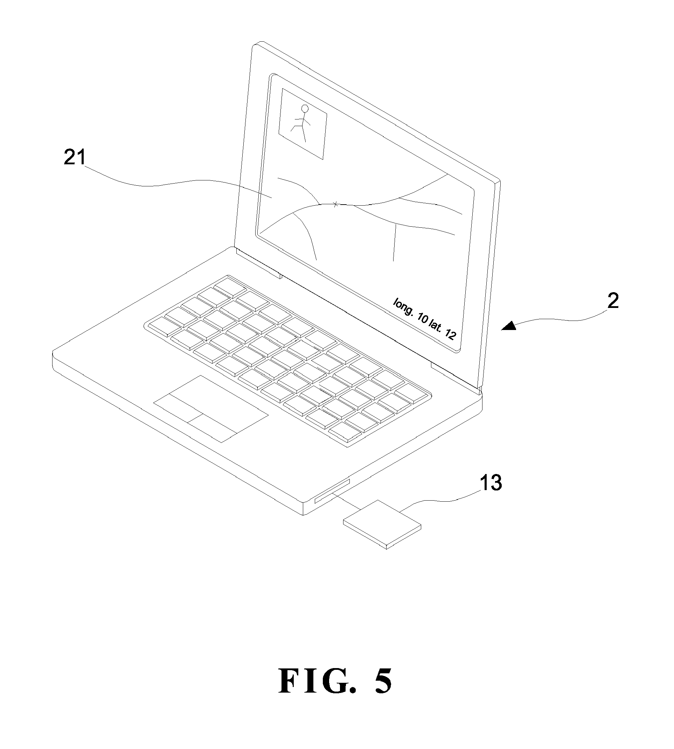

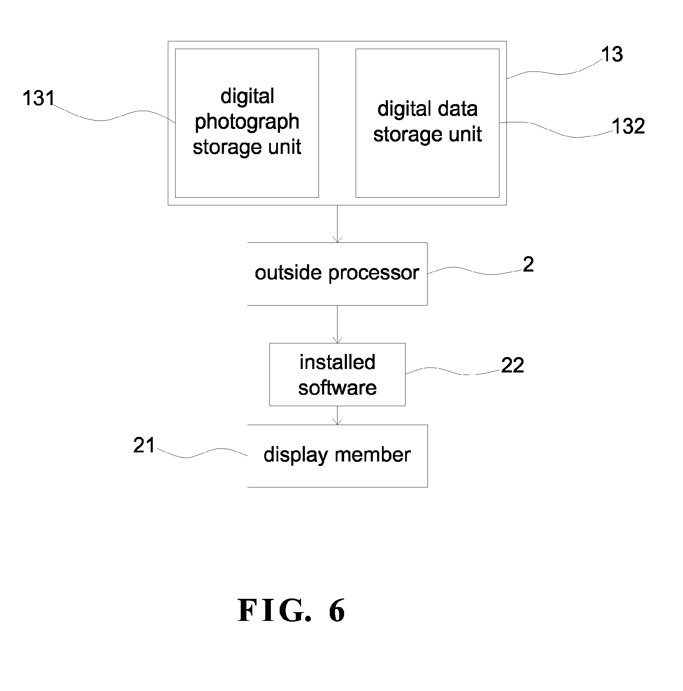

Please refer to FIG 5 and FIG 6 which are a perspective and a block views of a second preferred embodiment. As shown in the figures, on using the present invention, a storage member 13 is inserted into an outside processor 2 to be connected with, where the outside processor 2 can be a computer, a personal digital assistant (PDA), a mobile phone, etc.. The outside processor 2 reads the storage member 13 to fetch the photograph stored in the digital photograph storage unit 131 as well as the longitude and latitude for the photograph stored in the digital data storage unit. Then, an installed software 22 in the outside processor 2 is used to analyze the longitude and latitude so that a map for the location of the longitude and latitude of the photograph is displayed on a display member 21 of the outside processor 2. Thus, the camera 1 not only takes a photograph but also displays a map for the photograph so that a location where the photograph is taken is clearly and precisely recognized.

To sum up, the present invention is a photograph positioning device, where a photograph is taken together with a map shown for the location of the photograph.

The preferred embodiments herein disclosed are not intended to unnecessarily limit the scope of the invention. Therefore, simple modifications or variations belonging to the equivalent of the scope of the claims and the instructions disclosed herein for a patent are all within the scope of the present invention.

## Claims

1. A photograph positioning device, comprising:
- a coordinates locator (11);
- a photograph capture member (12); and
- a storage member (13),
wherein the coordinates locator (11) provides the longitude and latitude of a location where a photograph is taken;
wherein the photograph capture member (12) is connected with the coordinates locator (11) and the photograph is taken by the photograph capture member (12);
wherein the storage member (13) is connected with the coordinates locator (11) and the photograph capture member (12); and
wherein the storage member (13) comprises a digital photograph storage unit (131) for storing a photograph, and a digital data storage unit (132) for storing data relating to the photograph.

2. The photograph positioning device according to claim 1, further comprising a geographical-location display member (14),
wherein the geographical-location display member (14) is connected with the storage member (13); and
wherein the geographical-location display member (14) displays a map of the location where the photograph is taken.

3. The photograph positioning device according to claim 2, wherein the coordinates locator (11), the photograph capture member (12), the storage member (13) and the geographical-location display member (14) are integrated in a casing.

4. The photograph positioning device according to claim 1,
wherein the storage member (13) is connected with an outside processor;
wherein longitude and latitude of a photograph are stored in the digital data storage unit (132); and
wherein the outside processor displays a map for the longitude and latitude where the photograph is taken.

5. The photograph positioning device according to claim 4, wherein the outside processor is a device selected from a group consisting of a computer, a personal digital assistant (PDA) and a mobile phone.

6. The photograph positioning device according to one of claims 1 to 5, wherein the photograph is stored in the digital photograph storage unit (131) and the longitude and latitude of the location are stored in the digital data storage unit (132).

7. The photograph positioning device according to one of claims 1 to 6, wherein time, date and longitude and latitude for the photograph are stored in the digital data storage unit (132).

8. The photograph positioning device according to one of claims 1 to 7, wherein the coordinates locator (11) is a Global Positioning System (GPS).
